# FASCICULE DE BREVET EUROPEEN

(11) **EP 3 756 091 B1**
(45) Date de publication et mention de la délivrance du brevet: **13.04.2022**
(21) Numéro de dépôt: 19710051.4
(22) Date de dépôt: 14.02.2019
(51) Int. Cl.: G06F 9/46, H04L 29/08, G05B 15/00, H04L 12/28, B25J 9/16, G06F 9/54

(54) **PROCÉDÉ D'INTERCONNEXION ENTRE ROBOTS**
VERBINDUNGSVERFAHREN FÜR ROBOTER
ROBOT INTERCONNECTION METHOD

(30) Priorité: 20.02.2018 FR 1851429
(43) Date de publication de la demande: 30.12.2020
(73) Titulaire: Université De Reims Champagne-Ardenne, 51100 Reims (FR)
(72) Inventeur: AYAIDA, Marwane, 51100 REIMS (FR); MESSAI, Nadhir, 51100 Reims (FR); VALENTIN, Frédéric, 51350 Cormontreuil (FR); MARCHERAS, Dimitri, 51100 Reims (FR); AFILAL, Lissan, 51100 Reims (FR)
(74) Mandataire: Germain Maureau
(86) Numéro de dépôt international: PCT/FR2019/050328
(87) Numéro de publication internationale: WO 2019/162595

(56) Documents cités:
- EP-A1- 2 107 723
- US-A1- 2006 079 997
- US-A1- 2013 123 980
- US-B1- 6 374 155
- US-B1- 6 687 571

## Description

### Domaine et contexte

La présente invention concerne le domaine de la communication entre les objets connectés (robots mobiles, capteurs, etc...), et de l'interopérabilité de ces objets connectés.

Il est connu d'utiliser des robots mobiles de différents types, tels que des robots humanoïdes, des chariots mobiles avec ou sans bras manipulateur, des drones, etc...Ces robots sont très souvent associés avec différents capteurs d'acquisition de données d'environnement, et dotés d'une communication ad-hoc et de systèmes d'exploitation et de contrôle-commande différents. La mise en œuvre de ces différents objets, plus ou moins autonomes, pour leur faire exécuter des opérations complexes, en organisant une distribution des tâches à réaliser et une coopération de ces objets entre eux, nécessite des moyens de communications et d'échanges d'informations entre des équipements matériels et des logiciels souvent très hétérogènes.

A ce jour, il n'existe pas de logiciel ou programme d'interface, autrement appelé intergiciel, suffisamment générique pour assurer la communication et l'interopérabilité souhaitées entre ces objets mobiles (robots et/ou autres capteurs de données), hétérogènes tant par leurs caractéristiques physiques que par leur logiciel d'exploitation respectif, en permettant notamment l'ouverture de services applicatifs de haut niveau, ainsi que l'intégration aisée et unifiée de briques logicielles tierces. US 2006/079997 A1 décrit un procédé de gestion d'un ensemble de robots afin d'établir des trajectoires. US 2013/123980 A1 décrit un procédé de gestion par des opérateurs d'un ensemble de robots fonctionnant en coopération. US 6 374 155 B1 décrit un procédé de gestion d'un ensemble de robots comprenant au moins un robot navigateur chargé de piloter d'autres unités.

Le problème à résoudre est donc de concevoir un logiciel d'interface capable de fédérer des objets mobiles hétérogènes, en permettant notamment d'interconnecter ces objets pouvant appartenir à une ou plusieurs flottes d'objets pour la réalisation de tâches spécifiées, éventuellement à distance, entre eux et/ou par un ou plusieurs opérateurs.

L'invention a donc pour but de proposer une solution à tout ou partie de ce problème.

### Description de l'invention

A cet effet, la présente invention concerne un procédé pour l'interconnexion d'un premier robot avec au moins un deuxième robot, et un procédé pour la gestion de la coopération entre une pluralité de robots, ainsi qu'au moins un programme d'ordinateur comprenant les instructions configurées pour exécuter lesdits procédés.

La présente invention concerne un procédé pour l'interconnexion d'un premier robot avec au moins un deuxième robot, chaque robot comprenant au moins:
- une unité de contrôle-commande, l'unité de contrôle-commande comprenant au moins un processeur et au moins un module de mémoire;
- au moins un équipement périphérique du type actionneur ou capteur;
- au moins un équipement de communication connecté à au moins un réseau de communication;
- un premier programme P1, configuré pour piloter l'au moins un équipement de communication, et comprenant une pluralité de premiers modules logiciels s'exécutants sur l'au moins un processeur;
- un deuxième programme P2, comprenant une pluralité de deuxièmes modules logiciels s'exécutants sur l'au moins un processeur, la configuration dudit deuxième programme étant déterminée par un fichier de paramétrage comportant un champ typ_service indiquant un mode d'envoi parmi les modes interpréter ou direct, ledit mode d'envoi caractérisant les messages transmis par ledit deuxième programme
- un troisième programme P3, configuré pour commander l'au moins un actionneur et/ou l'au moins un capteur, et comprenant une pluralité de troisièmes modules logiciels s'exécutant sur l'au moins un processeur;
le procédé comprenant les étapes suivantes, mises en œuvre par le deuxième programme au sein de chacun des robots, après la réception par le deuxième programme d'un premier message en provenance du troisième programme:
- conversion du premier message en un deuxième message, le deuxième message étant formaté selon une structure objet prédéfinie comprenant un champ typ_msg indiquant un type dudit message parmi les types : commande, requête, ou information,
- transmission du deuxième message à au moins un programme parmi : premier programme appartenant au même robot, deuxième programme d'un autre robot;
le procédé d'interconnexion comprenant en outre les étapes suivantes, mises en œuvre par le deuxième programme au sein de chacun des robots, après la réception par le deuxième programme d'un troisième message, formaté selon ladite structure objet prédéfinie, en provenance d'au moins un programme parmi : premier programme appartenant au même robot, deuxième programme d'un autre robot, lorsque le champ typ_msg dudit troisième message indique le type commande ou le type requête:
- traduction du troisième message en une portion de programme apte à être mise en œuvre par le troisième programme lorsque le champ typ_service du fichier de paramétrage associé audit troisième message indique le mode d'envoi direct; et/ou
- transmission selon un deuxième protocole de transport, d'au moins une partie dudit troisième message, ou de ladite portion de programme, à destination du troisième programme.

Avantageusement, la structure objet prédéfinie et générique via laquelle le deuxième programme P2 assure la mise en forme des informations et/ou instructions à transmettre, est composée des champs suivants :
- type de message : commande, information ou requête;
- sous-type de message : type de données (position, réel, image, vidéo,...) ou de commande (avancer, reculer, stop,...) ;
- source : adresse expéditeur, composée du couple adresse IP/Port ou du nom de la source (le couple adresse IP/Port pouvant y être associé avec la table de routage);
- destination : adresse destinataire, composée du couple adresse IP/Port, ou nom du destinataire ;
- taille du champ de données ;
- données.

Selon un aspect de l'invention, l'étape de traduction comprend l'accès au sein du deuxième programme à un fichier de configuration (appartenant à P2) tel qu'un tableau de correspondance ou une base de données enregistré(e) dans l'au moins un module de mémoire, ledit fichier de configuration fournissant au deuxième programme la portion de programme apte à être mise en œuvre par le troisième programme.

Préférentiellement, ledit fichier de configuration permet au deuxième programme :
- de faire une correspondance entre le sous-type du message (défini dans le champ sous-type de la structure objet présentée ci-avant) et les données (définies dans le champ données de la structure objet présentée ci-avant)
- de sélectionner la portion de programme apte à être mise en œuvre par le troisième programme (traduction de la commande ou de la requête dans le langage approprié du robot pour que ce dernier puisse l'exécuter directement).

Selon un aspect de l'invention, l'étape de transmission de ladite au moins une partie dudit troisième message, ou de ladite portion de programme, comprend au moins :
- une première transmission, selon un deuxième protocole de transport, d'un quatrième message du deuxième programme vers un quatrième programme,
- une seconde transmission d'un cinquième message dudit quatrième programme à destination du troisième programme.

Selon un aspect de l'invention, un premier protocole de transport est utilisé pour la transmission d'un sixième message entre le deuxième programme du premier robot et le deuxième programme du deuxième robot.

Selon un aspect de l'invention, le premier, deuxième, troisième, quatrième, cinquième et sixième messages échangés sont au format JSON.

Selon un aspect de l'invention, le premier protocole est du type UDP.

Selon un aspect de l'invention, le deuxième protocole est du type TCP.

Selon un aspect de l'invention, l'au moins un équipement de télécommunication comprend un moyen de communication sans fil.

Selon un aspect de l'invention, le moyen de communication sans fil comprend au moins un module parmi : module de type WIFI, module de type RFID, module de type Bluetooth, module de type GSM.

Selon un aspect de l'invention, le deuxième programme du premier robot crypte le deuxième message avant de le transmettre si le destinataire est l'au moins un deuxième robot, et le deuxième programme du premier robot décrypte le troisième message avant de le traduire ou de le transmettre, si l'expéditeur est l'au moins un deuxième robot.
Ainsi, au sein de chaque robot, le deuxième programme est apte à crypter et/ou décrypter intelligemment les messages selon leur provenance et leur destination.

Selon un aspect de l'invention, l'au moins un deuxième robot comprend un opérateur distant connecté à un serveur internet.

Selon un aspect de l'invention, le troisième programme comprend le système d'exploitation du robot sur lequel il est installé et un programme pilote d'au moins un actionneur et/ou d'au moins un capteur.

L'invention concerne également un procédé pour la gestion de la coopération entre une pluralité de robots, chaque robot de la pluralité de robots comprenant au moins:
- une unité de contrôle-commande, l'unité de contrôle-commande comprenant au moins un processeur et au moins un module de mémoire;
- au moins un équipement périphérique du type actionneur ou capteur;
- au moins un équipement de communication connecté à au moins un réseau de communication;
- un premier programme, configuré pour piloter l'au moins un équipement de communication, et comprenant une pluralité de premiers modules logiciels s'exécutants sur l'au moins un processeur;
- un deuxième programme, comprenant une pluralité de deuxièmes modules logiciels s'exécutants sur l'au moins un processeur,
- un troisième programme, configuré pour commander l'au moins un actionneur et/ou l'au moins un capteur, et comprenant une pluralité de troisièmes modules logiciels s'exécutant sur l'au moins un processeur;
   le procédé comprenant au moins les étapes suivantes :
- émission par une couche applicative hébergée par un serveur ou accessible par internet, d'un fichier de mission, ledit fichier de mission comprenant une liste de tâches élémentaires planifiées et leur séquencement, et d'un fichier d'identification et de priorisation des équipements périphériques,
- réception dudit fichier de mission et dudit fichier d'identification et de priorisation, par un service équipement du premier programme de chaque robot de la pluralité de robots,
- transmission, par le premier programme de chaque robot de la pluralité de robots, d'un premier message de type requête à destination de son deuxième programme, pour connaître un identifiant de chaque périphérique disponible de l'au moins un périphérique de chaque robot de la pluralité de robots,
- mise en œuvre, par le deuxième programme de chaque robot de la pluralité de robot, du procédé pour l'interconnexion de robots selon l'invention pour demander au troisième programme (au sein du même robot) et transmettre au premier programme (au sein du même robot) les identifiants des périphériques disponibles sur chaque robot de la pluralité de robots;
- traitement par le service équipement du premier programme de chaque robot de la pluralité de robots des identifiants des périphériques disponibles pour générer une liste des tâches réalisables par chaque robot de la pluralité de robots (chaque robot détermine en son sein la liste de tâches qu'il peut réaliser een fonction des périphériques dont il dispose),
- transmission à chaque robot de la pluralité de robots et/ou à un service centralisé du serveur, par chaque service négociation/élection du premier programme, de ladite liste des tâches réalisables par chaque robot de la pluralité de robots,
- production, par un service centralisé du serveur (cloud) et/ou suite à un processus de communication entre chaque service négociation/élection des robots, sur la base du fichier d'identification et de priorisation des périphériques et de la liste des tâches réalisables, d'une liste des robots participant à la mission,
- exécution de la mission,
- synchronisation des robots,
- supervision de l'exécution de la mission.

L'invention concerne également un programme d'ordinateur comprenant un ensemble d'instructions configurées pour exécuter au moins un procédé selon l'invention.

Préférentiellement, l'invention concerne un programme d'ordinateur comprenant un ensemble d'instructions configurées pour exécuter le procédé pour l'interconnexion de robots, et un programme d'ordinateur comprenant un ensemble d'instructions configurées pour exécuter le procédé de gestion de coopération inter-robots.

### Figures

Pour sa bonne compréhension, l'invention est décrite en référence aux dessins ci-annexés représentant, à titre d'exemple non limitatif, une forme de réalisation d'un dispositif selon l'invention.
La figure 1 est une représentation schématique d'un robot mobile selon une première variante de l'invention totalement intégrée à celui-ci, et de son environnement.
La figure 2 est une représentation schématique d'une flotte de robots communicants selon ladite première variante de l'invention totalement intégrée à ceux-ci.
La figure 3 est une représentation schématique de l'architecture de l'invention selon une seconde variante, où l'invention est d'une part partiellement intégrée aux robots et d'autre part partiellement déportée vers le cloud.
La figure 4 est une représentation schématique des différents acteurs (robots, utilisateurs) et des différentes voies de communications possibles selon l'invention.
La figure 5 illustre un diagramme de communication entre un premier robot R1 et un second robot R3.
La figure 6 illustre un diagramme de communication entre un utilisateur U1 et un robot R3.
Les figures 7 et 8 présentent schématiquement un scénario de collaboration de robots selon l'invention.

### Description détaillée

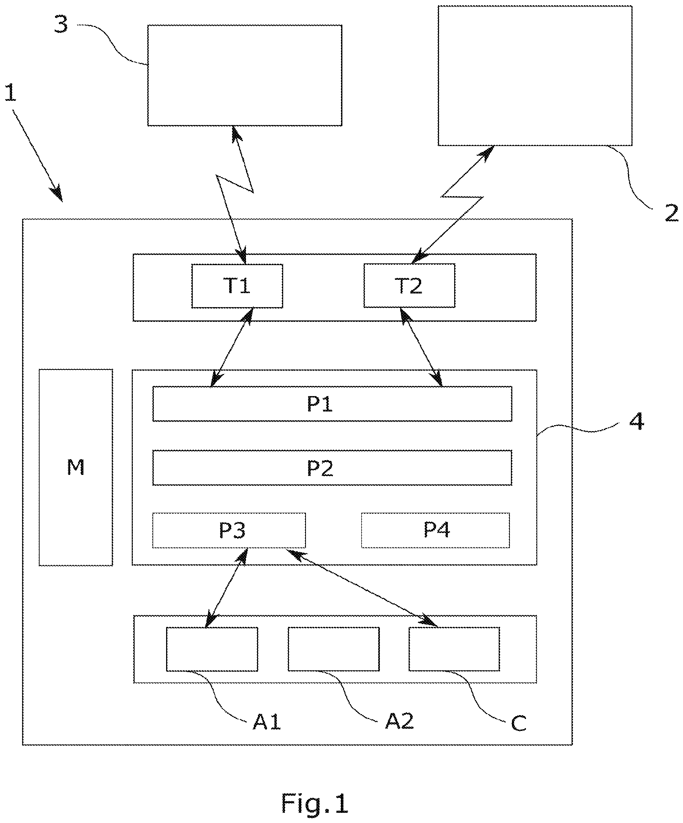

L'invention et ses modes de réalisation sont décrits en référence aux dessins ci-annexés et représentés aux figures 1 à 8.

L'invention concerne un procédé qui est mis en œuvre par un deuxième programme P2, sur un robot autonome 1 tel que celui schématiquement représenté sur la figure 1; P2 comprend un ou plusieurs sous-programmes ou modules logiciels, et constitue une couche logicielle qui assure l'interface entre un premier programme P1 et deux autres programmes, un troisième programme P3 et un quatrième programme P4 ; ces programmes P1, P3 et P4 comprennent chacun également un ou plusieurs sous-programmes ou modules logiciels, et constituent chacun une couche logicielle.

Le robot 1, tel que présenté à la figure 1, est en communication avec :
- d'autres robots 2, auxquels il peut fournir des informations et/ou des commandes et via lesquels il peut recevoir des informations et/ou commandes, passivement et/ou sur requête dans les deux cas, et
- avec un serveur distant 3 par l'intermédiaire duquel :
   ∘ un opérateur peut spécifier à distance des tâches à réaliser par le ou les robots qui interagissent entre eux,
   ∘ le robot 1 peut communiquer (informations et/ou commandes, passivement et/ou sur requête) avec les autres robots 2.

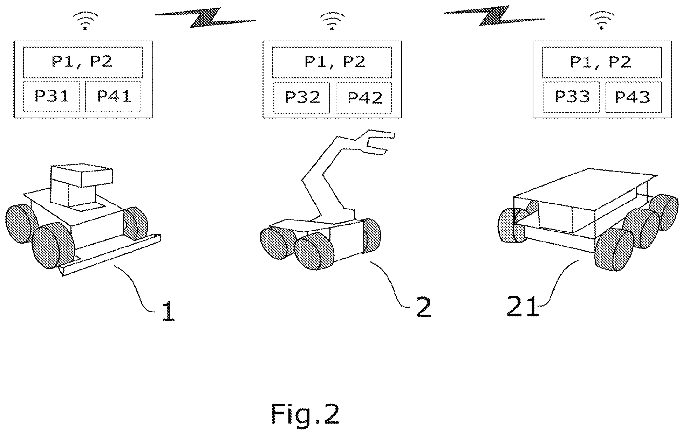

Selon une variante de l'invention, les robots 1 et 2 sont aptes à communiquer directement et exclusivement entre eux (par exemple dans un mode de fonctionnement dégradé où le serveur distant 3 est en panne, ou par exemple lorsque l'on souhaite réaliser de la maintenance et/ou pour des raisons de coûts en se dispensant de l'usage d'un serveur distant 3).
- Le robot autonome 1 qui sert ici à illustrer la description du procédé peut être un robot autonome ou tout autre objet connecté pourvu que cet objet comprenne les principaux équipements matériels représentés sur la figure 1 : au moins un équipement périphérique de type actionneur A1, A2 pour la mobilité ou la préhension de charge, etc... et/ou de type capteur C pour l'acquisition de données d'environnement (position géographique, températures, etc....) ;
- au moins une unité de contrôle-commande du ou des équipements périphériques, comprenant au moins un processeur 4 et au moins un module de mémoire M ; les programmes ou couches logicielles P1, P2, P3 , et P4 (module d'adaptation) s'exécutent sur le processeur 4 de l'unité de contrôle-commande (visualisable également à la figure 2).
- au moins un équipement de télécommunication T1, T2, tels que par exemple des modules de communication WIFI, ou Bluetooth, ou GSM, permettant à l'objet considéré 1 de communiquer avec un serveur distant 3 et/ou avec un autre objet connecté 2 ;

Le premier programme P1 assure la gestion des moyens de télécommunication T1, T2 et la prise en charge des protocoles de transport des messages qui s'échangent entre les sous-programmes d'un même robot ou objet connecté, et entre les programmes et sous-programmes appartenant à deux robots ou objets connectés distinct. Avantageusement, le premier programme P1 comprend un ensemble de modules logiciels tels que (non limitatif) :
- un service de collaboration,
- un service de négociation/élection,
- un service équipements,
- un bus de communication comprenant entre autres un service de détection de périphériques, un service de synchronisation de données.

Le deuxième programme P2, ou deuxième ensemble de sous-programmes ou modules logiciels, met en œuvre le procédé selon l'invention.

Les premier et deuxième programmes P1, P2, sont génériques et peuvent être déployés sur tout robot, indépendamment du système d'exploitation.

Le troisième programme P3, ou troisième ensemble de sous-programmes ou modules logiciels, comprend le système d'exploitation spécifique de chaque robot ou objet connecté, et les pilotes spécifiques des actionneurs et ou capteurs associés au robot ou à l'objet connecté considéré. Avantageusement, le programme P3 comprend un ensemble de modules logiciels tels que (non limitatif) :
- système d'exploitation robotique (ex : ROS, Universal Robot OS, ABB OS) : bibliothèques natives, package navigation...
- framework natif : pilotes, librairies...

Par la présente description, notamment du troisième programme P3, on comprend bien que l'invention vient s'articuler autour de l'OS robotique propre au robot afin de fournir et garantir son interopérabilité au sein d'une ou plusieurs flottes de robots.

Le quatrième programme P4, ou quatrième ensemble de sous-programmes ou module logiciel d'adaptation, est le seul module logiciel de l'invention qu'il est nécessaire d'adapter au robot sur lequel l'invention est installée.

Une bibliothèque d'adaptation, externe au robot et aux programmes P1, P2, P3, P4, permet notamment de générer le squelette dudit quatrième programme dans le langage propre du robot.
Ci-dessous en italique en langage de programmation (les commentaires sont en caractères gras), est présenté un exemple de squelette de quatrième programme P4 tel que généré via ladite bibliothèque d'adaptation, et qui doit être complété et finalisé par l'opérateur selon de ses besoins (entre autres au niveau des fonctions « dothis », « dothat ») : 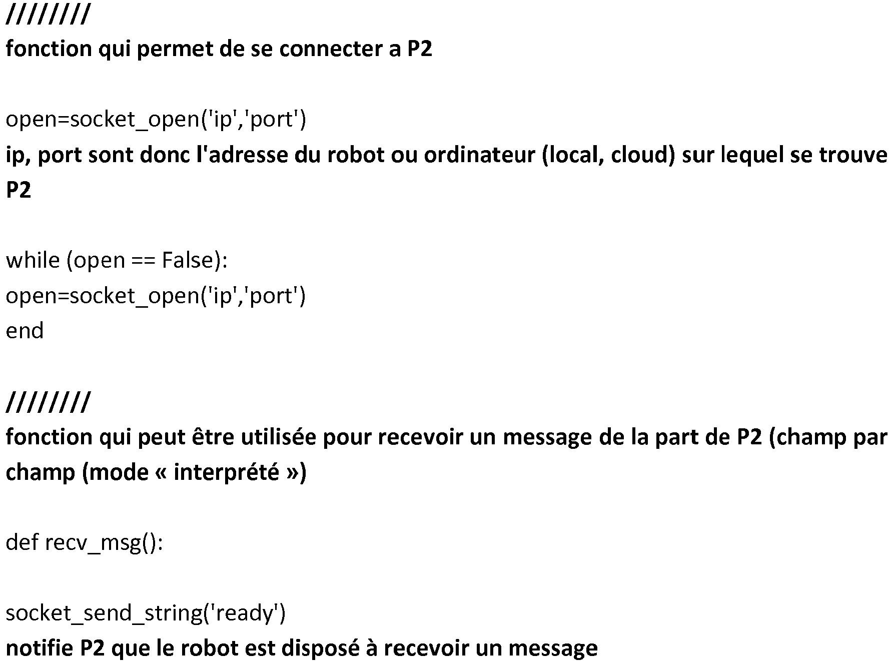 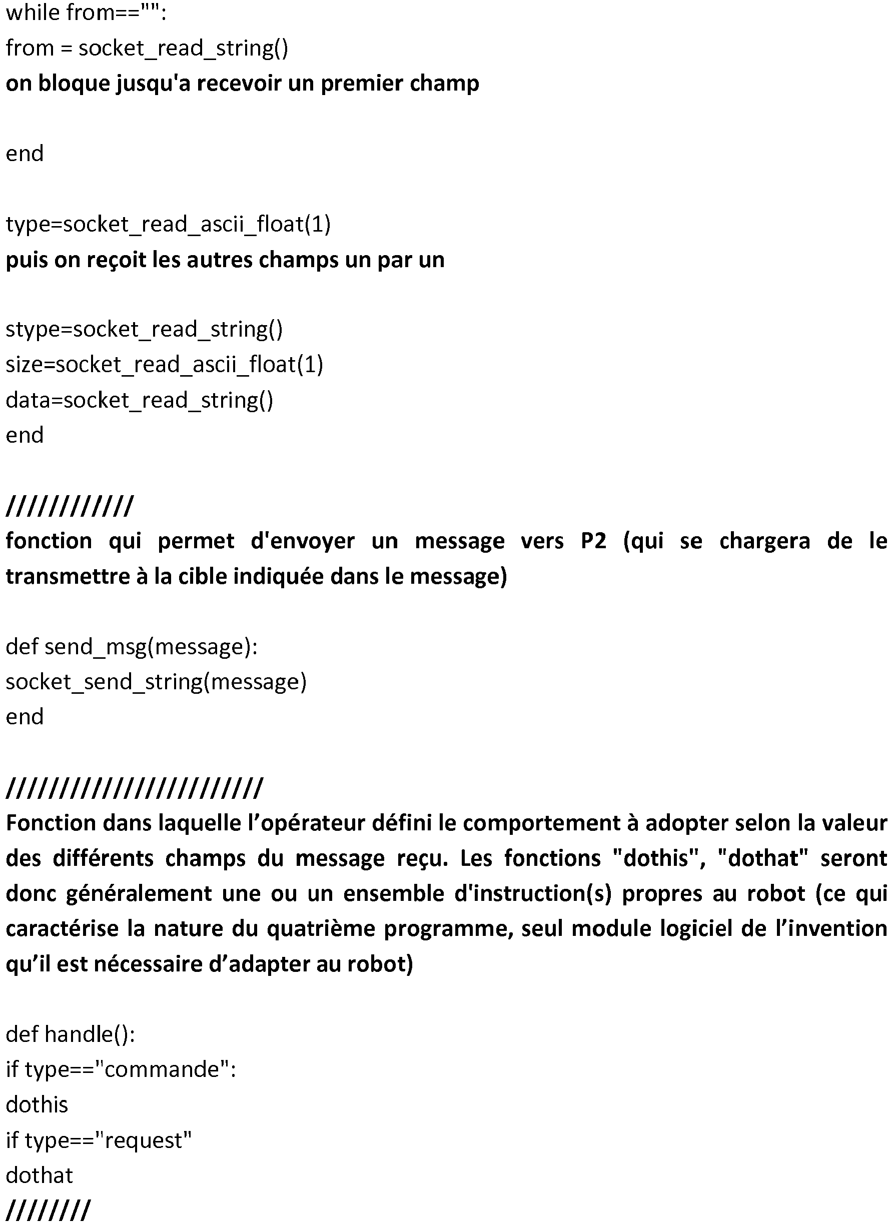 La bibliothèque d'adaptation est par exemple disponible dans le Coud ou disponible via un système qui peut être relié au robot à la demande tel qu'un ordinateur local ou une tablette.
La bibliothèque d'adaptation permet également d'assister l'opérateur dans la définition et la configuration du ou des scénario d'interaction entre les robots.

Le module logiciel d'adaptation (quatrième programme P4) est ainsi personnalisé en fonction des besoins de l'opérateur, et au moins partiellement généré via ladite bibliothèque d'adaptation. Il comporte entre autres quatre fonctions :
- « Connexion » : cette fonction permet de connecter le robot aux couches logicielles P1 et P2, elle repose notamment sur l'indication d'un couple Adresse IP/Port correct.
- « Envoi message » : un message est composé de plusieurs champs envoyés les uns après les autres, préférentiellement, ces messages sont composés de six champs (type, sous-type, source, destination, taille, données).
- « Réception message » : les données reçues doivent respecter une structure spécifique telle que détaillée ci-après; par ailleurs dès qu'un robot est en mesure de recevoir des données, le programme P4 envoie un message à la couche P2 lui notifiant sa capacité à recevoir des messages.
- « Traitement message » : cette fonction est spécifiquement adaptée à chaque situation, elle définit dans le langage propre au robot les comportements à adopter en fonction, d'une part des messages et données reçus et d'autre part de la situation. Notamment, cette fonction définit la manière dont le robot transmet en son propre sein une commande, une requête, une information (comportement communicatif du robot) depuis le quatrième programme P4 vers le troisième programme P3.

Sur chacun des robots ou objets interconnectés la couche logicielle P1 est configurée pour transporter les messages, préalablement dûment formatés, d'un robot (ou objet) à un autre robot (ou objet) et/ou au serveur distant 3, via les équipements de télécommunications disponibles pour les échanges entre robots et/ou objets distants. Ensemble, les couches logicielles P1 et les équipements de télécommunications mis en œuvre par ces couches logicielles assurent, entre autres, la fonction d'un bus de communication BC, matériel et logiciel, permettant de relier les différents robots entre eux et au Cloud. Préférentiellement, chaque bus de communication BC dispose d'un routeur R qui lui est propre, permettant entre autres de relier le robot directement au Cloud. Les couches logicielles supérieures hébergées par le serveur, par exemple l'IHM, ou dans le cloud, sont dites couches applicatives.

Le programme intermédiaire ou la couche logicielle intermédiaire, souvent appelé « intergiciel » ou « middleware », P2 est configuré pour :
- d'une part, transformer les informations ou commandes reçues via le bus de communication du niveau supérieur P1 et/ou en provenance des autres robots (notamment en provenance du deuxième programme du robot expéditeur) et/ou du serveur distant 3, en informations ou instructions compréhensibles ou exécutables par la couche logicielle inférieure P3 qui est spécifique au robot considéré pour le pilotage des actionneurs et/ou capteurs;
- d'autre part, en sens inverse, formater d'une manière générique les messages d'informations ou de commandes destinées à être transmis par le robot considéré vers les autres robots (ou objets connectés) et/ou le serveur distant 3; les messages ainsi génériquement formatés seront reçus puis transformés par la couche intergicielle P2 du robot ou de l'objet connecté destinataire.

A la différence des couches logicielles P3 et P4 de chaque robot ou objet connecté, qui sont hétérogènes et propres à chaque robot ou objet, la couche logicielle intermédiaire P2 est générique. Cette couche logicielle intermédiaire P2 assure l'interface entre les formats et instructions propriétaires mis en œuvre sur chaque robot par la couche logicielle P3 pour le pilotage des actionneurs et acteurs du robot considéré, et un format générique commun à l'ensemble des robots et objets connectés; cette fonction d'interface comprend notamment un mécanisme de traduction des informations ou commandes reçues selon le format générique en informations ou instructions exécutables selon l'une des couches logicielles P4 ou P3 du robot destinataire.

Tel qu'illustré à la figure 2, les autres robots 2, 21 avec lesquels le robot 1 communique peuvent comprendre :
- des équipements matériels (actionneur et/ou capteur, unité de contrôle-commande avec processeur et module mémoire, équipement de télécommunication) de même nature que ceux du robot 1,
- une architecture logicielle (programmes P1, P2) de même nature que celle du robot 1,
- une architecture logicielle (programmes P3, P4) qui leur est spécifique.

Par exemple, le procédé selon l'invention peut permettre d'interconnecter le robot 1 comprenant les couches P1, P2, P31 et P41 avec :
- un premier robot 2 possédant un actionneur, deux capteurs, un équipement de télécommunication de type wifi, une unité de contrôle-commande des équipements périphériques comprenant au moins un processeur et au moins un module de mémoire; les programmes ou couches logicielles P1, P2, P32, P42 dudit premier robot 2 s'exécutent sur son processeur,
- un second robot 21 possédant six capteurs, deux équipements de télécommunication de type wifi et Bluetooth, une unité de contrôle-commande des équipements périphériques comprenant au moins un processeur et au moins un module de mémoire ; les programmes ou couches logicielles P1, P2, P33, P43 dudit second robot 21 s'exécutent sur son processeur.
Les programmes P1, P2 de chacun des robots interconnectés possèdent les mêmes briques logicielles (identiques).

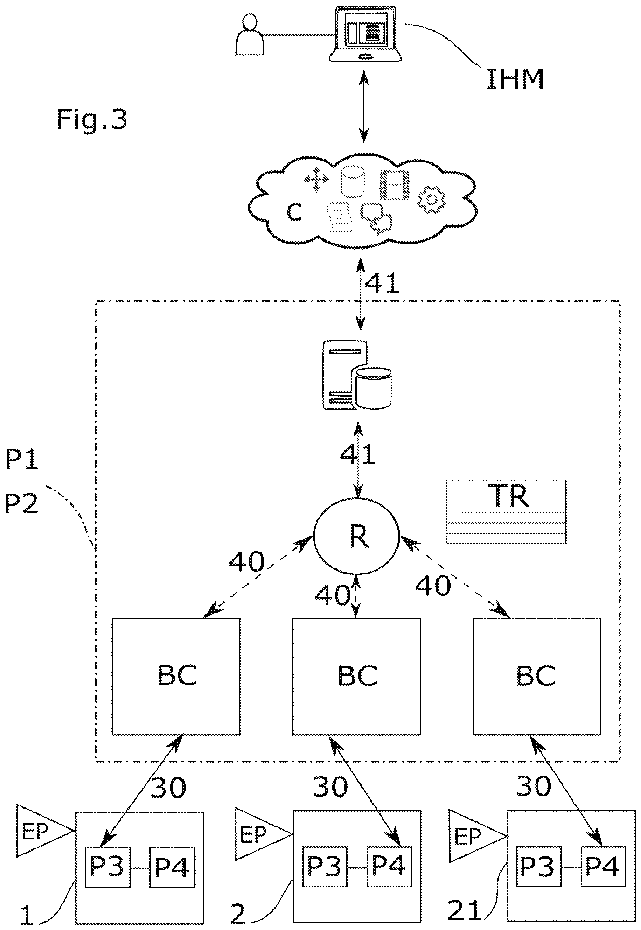

La figure 3 illustre un mode de réalisation de l'invention, dans lequel les robots (au sens matériel) sont uniquement munis des programmes P3 et P4 qui leurs sont propres, tandis que les programmes génériques communs P1 et P2 sont déportés vers le cloud. Les robots communiquent entre eux par l'intermédiaire d'un bus de communication BC matériel et logiciel, et d'au moins un routeur R auquel est associé une table de routage TR, et éventuellement avec le cloud C et/ou au moins un utilisateur humain via une interface homme-machine IHM.

Préférentiellement, ladite table de routage comprend une liste de doublet sous la forme (nom du robot, adresse IP : Port) qui permet au routeur avantageusement intégré au deuxième programme P2 de rediriger correctement les messages. Ainsi un robot n'a qu'à connaître le nom du robot auquel il veut envoyer un message.

Lorsque des informations parviennent au deuxième programme P2 pour être transmises à un robot ou objet destinataire, le deuxième programme P2 assure la mise en forme des informations et/ou instructions à transmettre dans un message selon une structure objet prédéfinie et générique, composée des champs suivants :
- type de message : commande, information ou requête;
- sous-type de message : type de données (position, réel, image, vidéo,...) ou de commande (avancer, reculer, stop,...) ;
- source : adresse expéditeur, composée du couple adresse IP/Port ou du nom de la source (le couple adresse IP/Port pouvant y être associé avec la table de routage);
- destination : adresse destinataire, composée du couple adresse IP/Port, ou nom du destinataire ;
- taille du champ de données ;
- données.

Cette structure générique permet une transmission transparente des messages aux niveaux supérieurs (P1 et P2).

La configuration de la couche logicielle P2 est basée sur un format de fichier JSON. Ce fichier de paramétrage définit un certain nombre de paramètres dont :
- adresse IP du robot (vue du serveur) sur laquelle est exécuté le deuxième programme P2 ;
- nom utilisé pour identifier le robot ;
- port d'écoute externe, sur lequel le deuxième programme P2 doit écouter les messages externes,
- port d'écoute interne, sur lequel le troisième ou quatrième programme P3, P4 du robot doit se connecter;
- type de service, qui permet d'indiquer si les messages émis à destination du robot (avec lequel on souhaite communiquer) sont destinés à être « interprétés » (après réception) par le robot destinataire, ou si les messages sont délivrés selon un mode direct.
   On entend par « interprétés » le fait que le robot doive définir son comportement en analysant les valeurs des champs du message reçu. Cette étape d'interprétation étant réalisée par le quatrième programme P4 et étant préconfigurée via la bibliothèque d'adaptation présentée auparavant.

En service direct, si le type de message est une commande ou une requête, et grâce au fichier de configuration, le deuxième programme P2 s'exécutant sur le robot destinataire traduit la commande ou la requête en une commande directement exécutable sur ce robot destinataire.

Selon un aspect de l'invention, le fichier de configuration est généré (par exemple par un programme externe) à partir de la bibliothèque d'adaptation, préférentiellement préalablement à son injection dans le deuxième programme P2.

Préférentiellement, le recours en mode direct au fichier de configuration survient uniquement lorsque les messages sont des commandes et/ou des requêtes à destination de robots autorisant l'exécution de commandes par un système externe.

A titre d'exemple, on présente ci-dessous en italique, la structure en langage de programmation d'un fichier de configuration, faisant notamment correspondre à la commande « move » la portion de programme traduite par

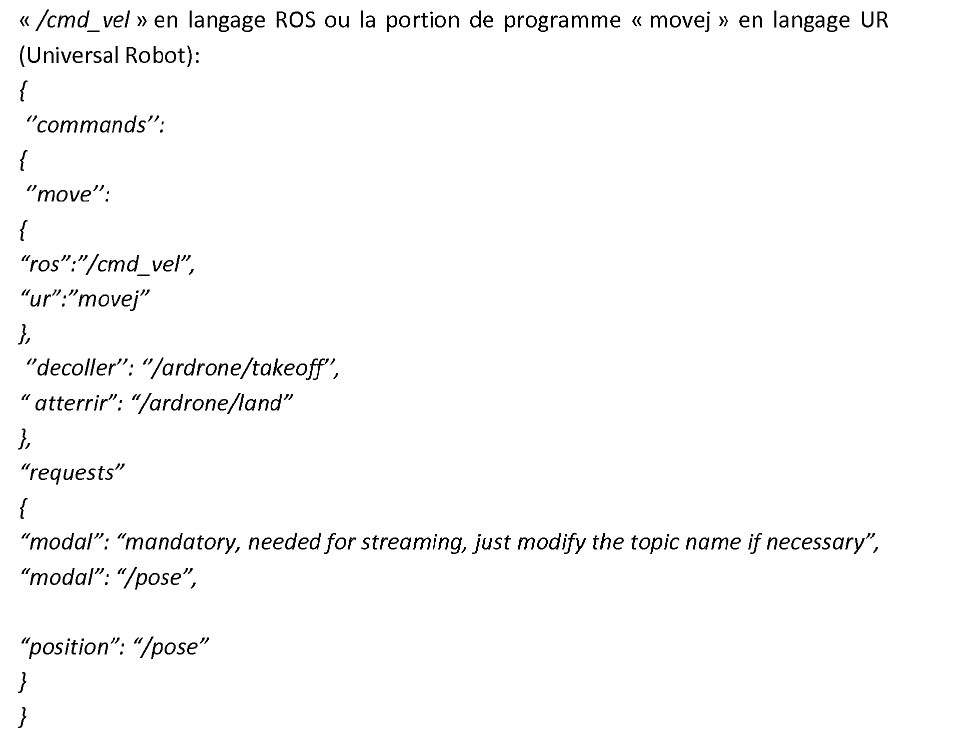

La communication entre le deuxième programme P2 et les modules des couches logicielles inférieures P3, P4 du robot considéré se fait via une connexion de type TCP, représentée à la figure 3 par les flèches pleines 30. La communication entre différents deuxième programme P2 appartenant à une pluralité de robots 1, 2, 21 s'effectue selon un protocole de type UDP représenté à la figure 3 par les flèches en pointillés 40. Egalement, la communication vers le serveur et/ou le cloud C s'effectue selon un protocole de type UDP représenté à la figure 3 par les flèches 41.

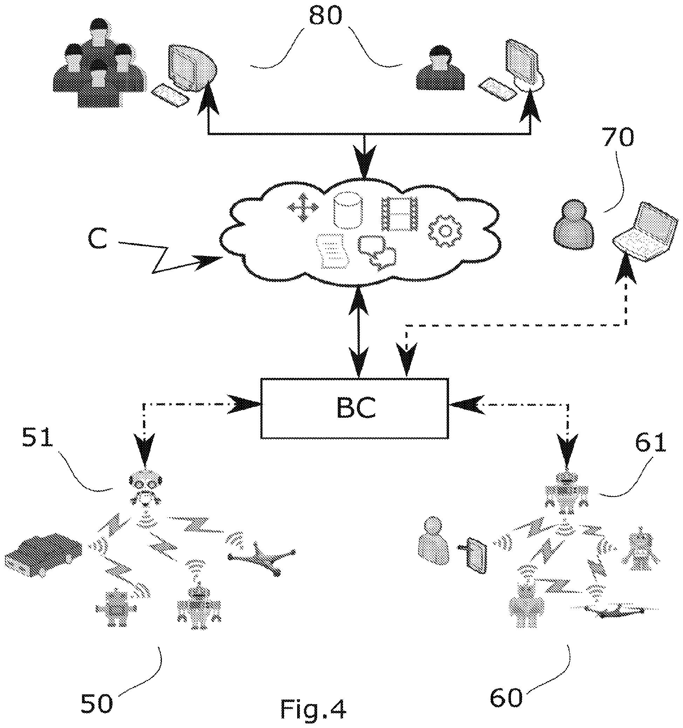

Le fonctionnement global de l'invention est repris à la figure 4, afin d'illustrer une autre variante de communication dans laquelle des flottes distinctes de robots 50, 60 communiquent entre elles via le procédé selon l'invention. Ces flottes peuvent en outre comprendre des robots maîtres 51, 61, aptes à transmettre les messages reçus de l'amont via le bus de communication BC depuis par exemple l'autre flotte, un utilisateur direct 70, le cloud C, ou au moins un utilisateur délocalisé 80 passant par le cloud C.

Par ailleurs, préférentiellement, lorsqu'un nouveau robot souhaite se joindre à une flotte ou entrer en communication avec au moins un autre robot qui ne le reconnaît pas encore, les premiers échanges sont effectués selon le protocole UDP, et encore plus préférentiellement selon le mode de diffusion « broadcast ».

Le procédé d'interconnexion selon l'invention permet, grâce à un ensemble de couches et modules logiciels très majoritairement générique, d'une part d'interconnecter les robots hétérogènes d'une même flotte, mais également d'interconnecter plusieurs flottes entre elles.

Les ordres sont formulés à partir de la ou les couche(s) applicative(s) existantes (IHM distantes, IHM locale sur le site robotique ou sur le robot lui-même, Cloud...).

Ainsi, l'invention concerne également un procédé pour la gestion de la coopération entre robots hétérogènes (présentant des systèmes d'exploitation différents), comprenant entre autre les étapes consistant à :
- émettre depuis la couche applicative (IHM, Cloud) un ensemble de fichiers présentant une mission, comprenant entre autres une liste d'identifiants de tâches élémentaires planifiées (LTP), et un fichier de priorisation des périphériques,
- recevoir au niveau du service « équipement » de la couche P1 de chaque robot ladite liste d'identifiants de tâches élémentaires planifiées (LTP),
- transmettre (au sein d'un même robot) à partir de la couche P1 un message de type requête à destination de la couche P2, visant à connaître les périphériques disponibles sur ce robot,
- mettre en œuvre le procédé d'interconnexion selon l'invention au niveau de la couche P2 afin de :
   ∘ transmettre la requête aux couches P3 et/ou P4 de manière adéquate,
   ∘ récupérer les informations de périphériques requises en provenance des couches P3 et/ou P4,
   ∘ transmettre à la couche P1 lesdites informations, converties selon la structure objet prédéfinie,
- traiter au niveau du service « équipement » les informations reçues au niveau de la couche P1 et générer une liste des tâches réalisables (LTR) par le robot,
- transmettre à l'ensemble des robots, à partir du service « négociation/élection » de la couche P1, ladite liste des tâches réalisables (LTR) par le robot
- échanger des messages de négociation entre les différents services « négociation/élection » des différentes couches P1 des différents robots,
- générer, au niveau du Cloud et/ou entre les robots sur la base des messages de négociation échangés et du fichier de priorisation des périphériques, une liste (fichier) des robots participant à la mission (LRM),
- déclencher l'exécution du plan de déroulement de la mission,
- synchroniser les robots,
- superviser la collaboration entre les robots,

Préférentiellement, l'ensemble de fichiers formalisant une mission comprend au moins : une liste d'identifiants de tâches élémentaires à exécuter (LTP), un fichier de paramètres relatifs aux contraintes sur le séquencement desdites tâches, une liste des identifiants des périphériques (actionneurs, capteurs...) nécessaires à la réalisation des tâches, un fichier de priorisation des périphériques.

Préférentiellement, la transmission à partir et à destination de la couche P1 s'effectue via un service de détection de périphériques appartenant au bus de communication BC.

Préférentiellement, la liste des tâches réalisables (LTR) par le robot est sous forme d'un fichier ou sous forme d'une base de données contenant entre autre l'identifiant du robot et la liste des identifiants des tâches qu'il peut réaliser parmi la liste d'identifiants de tâches élémentaires (LTP).

Préférentiellement, l'ensemble des fichiers échangés sont au format JSON.

L'exécution de la mission peut être déclenchée automatiquement via des programmes dans le Cloud, ou via des utilisateurs depuis des interfaces dédiées IHM, déportées ou locales.

Avantageusement, les données de périphériques sont récupérées par un service de « synchronisation des données » appartenant au bus de communication BC de la couche P1.

Avantageusement, la supervision de la collaboration inter-robots s'effectue au niveau du service « collaboration » de la couche P1 de chaque robot.

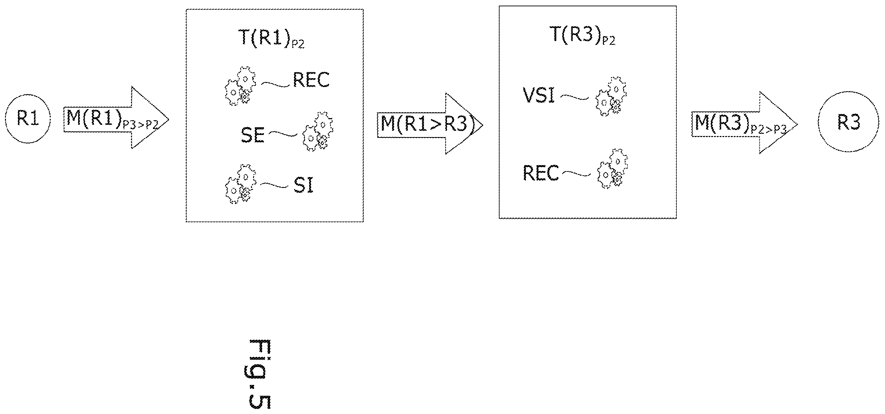

Le diagramme de la figure 5 illustre une communication entre un premier robot R1 et un second robot R3. Nous allons maintenant décrire les différentes étapes de cette communication avec, en italique, les instructions correspondantes du langage de programmation :
- Un message M(R1)_{P3>P2} est envoyé du troisième programme P3 du robot R1 au deuxième programme P2 du robot R1:
   M(R1)_{P3>P2} = *"info*/*position*/*robot3*/*3.0.1"*.
- Un traitement T(R1)_{P2} est alors effectué au sein du robot R1 par la couche P2, pour formater et/ou reconstituer REC le message selon la structure objet prédéfinie : 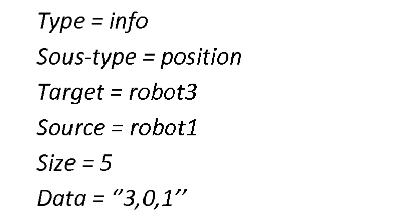
- Suivi d'une étape dite de sérialisation SE du message par la couche P2, par exemple au format JSON, ce format permettant notamment d'assurer de l'interopérabilité et de la facilité à stocker les informations à posteriori : 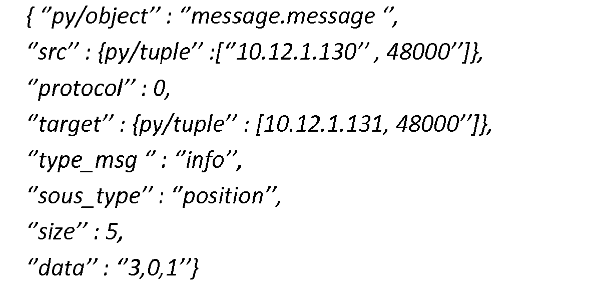
- suivi d'une étape de signature par la couche P2 (par exemple par signature cryptographique à partir d'une clé interne au sein du code) du message SI, cette étape assurant l'intégrité de la chaîne JSON: 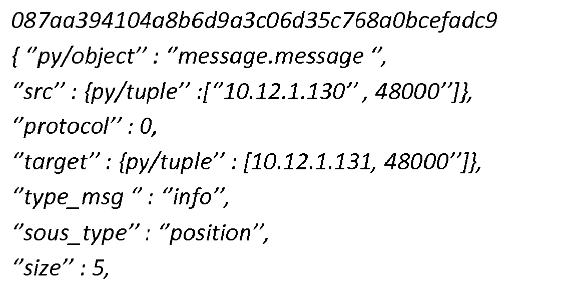 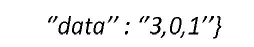
- Un message M(R1>R3) est envoyé du robot R1 au robot R3.
- Un traitement T(R3)_{P2} est alors effectué au sein du deuxième programme du robot R3, pour vérifier VSI la signature et reconstituer REC le message, qui est ensuite transmis M(R3)_{P2>P3} par le deuxième programme P2 du robot R3 au troisième programme P3 du robot R3.

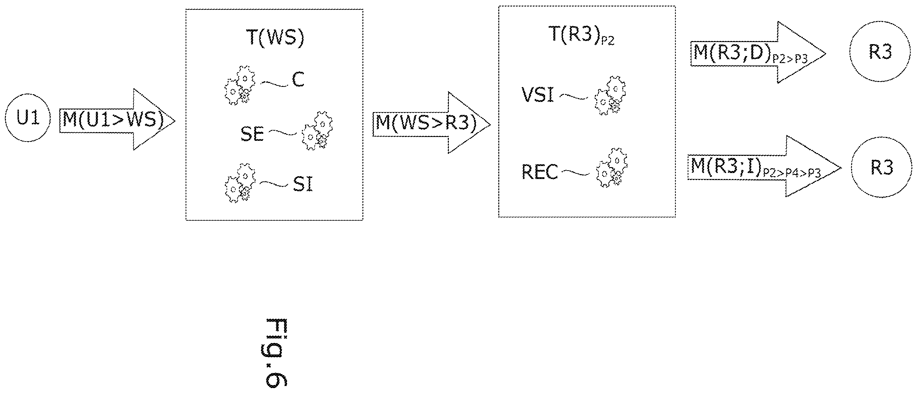

Enfin, le diagramme de la figure 6 illustre une communication entre un utilisateur U1 et un robot R3. Nous allons décrire les différentes étapes de cette communication avec, en italique, les instructions correspondantes du langage de programmation :
- Un message M(U1>WS) est envoyé par l'utilisateur U1 au serveur WS:
   M(U1>WS) = *« Comand :move :userl :robot3 :0.1,0.0,0.3 »*
- Un traitement T(WS) est alors effectué au sein du serveur WS, pour constituer C le message selon la structure objet prédéfinie : 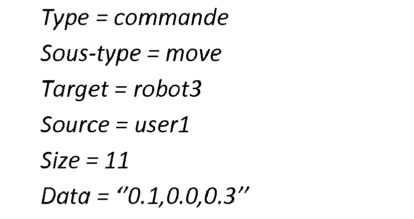
- Suivi d'une étape dite de sérialisation SE et de signature SI du message : 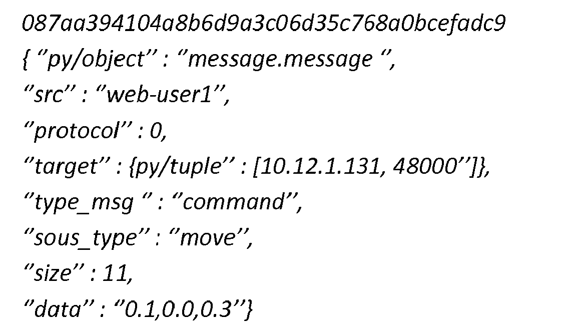
- Un message M(WS>R3) est envoyé du server WS au robot R3.
- Un traitement T(R3)_{P2} est alors effectué au sein dudeuxième programme du robot R3, pour vérifier VSI la signature et reconstituer REC le message, qui est ensuite transmis par le deuxième programme P2 du robot R3 au troisième programme P3 du robot R3, selon le scénario prévu soit :
   ∘ selon le mode « direct » (M(R3;D)_{P2>P3}) dans lequel la commande/requête est fournie sous la forme adéquate au robot (dans le cas d'un robot qui autorise l'exécution de commandes par un système externe), directement du deuxième programme au troisième programme, par l'intermédiaire du fichier de configuration :
      par exemple pour un robot avec OR ROS : 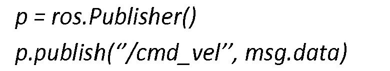
   ∘ selon le mode « interpréter » (M(R3;I)_{P2>P4>P3}) dans lequel l'information (de manière générale) ou la commande/requête (dans le cas de robots n'autorisant pas l'exécution de commandes par un système externe) est fournie au robot, du deuxième programme au troisième programme via le quatrième programme.
      Dans ce mode, le deuxième programme envoie le message champ par champ (selon la structure objet) au quatrième programme et le quatrième programme fourni les éléments adéquats au troisième programme, ces éléments adéquats étant générés au sein du quatrième programme et dépendants de la structure (squelette, programmation prévue pour les comportements à adopter...) dudit quatrième programme.

### Sécurité des échanges

Divers canaux de communication sont mis en jeu par l'invention. On liste entre autres :
- communications selon un protocole de type UDP, relatives au premier programme P1 et/ou au second programme P2,
- communications selon un protocole de type TCP, entre robots,
- communications selon un protocole de type UDP, entre le Cloud et les premier et second programmes P1 et P2.

Avantageusement, les différents canaux de communication sont sécurisés.

Différents choix techniques sont possibles, et l'Homme du métier sait choisir les technologies les plus adaptées à l'application visée.

A titre d'exemple, on cite :
- dans le cas de communications selon un protocole UDP :
   ∘ l'usage de liens directs ethernet,
   ∘ l'usage du protocole DTLS (« Datagram Transport Layer Security » en anglais),
   ∘ l'usage d'une suite cryptographique (« cipher suite » en anglais) mettant en œuvre entre autres des algorithmes de chiffrement tels que par exemple AES (« Advanced Encryption Standard » en anglais) et de hachage tels que par exemple SHA (« Secure Hash Algorithm » en anglais)
- dans le cas de communications selon un protocole TCP :
   ∘ l'encryptage et l'authentification par pairs via le protocole « SSL » (couche de sockets sécurisés), ou
   ∘ l'encryptage et l'authentification par pairs via le protocole « TLS » (sécurité de couche transport), via une implémentation libre (par exemple : OpenSSL) ou non, et mettant en œuvre une suite cryptographique (« cipher suite » en anglais), permettant le paramétrage de la sécurité dudit protocole TLS via :
      ▪ d'une part un mécanisme d'échange de clés par exemple par un chiffrement asymétrique tel que RSA, ou via l'algorithme Diffie-Hellman, selon un mode anonymisé ou non,
      ▪ d'autre part des mécanismes assurant la confidentialité et l'intégrité des données échangées, par exemple via des algorithmes de chiffrement tels que AES (« Advanced Encryption Standard » en anglais) et de hachage tels que SHA (« Secure Hash Algorithm » en anglais)

### Exemple de scénario d'application industrielle

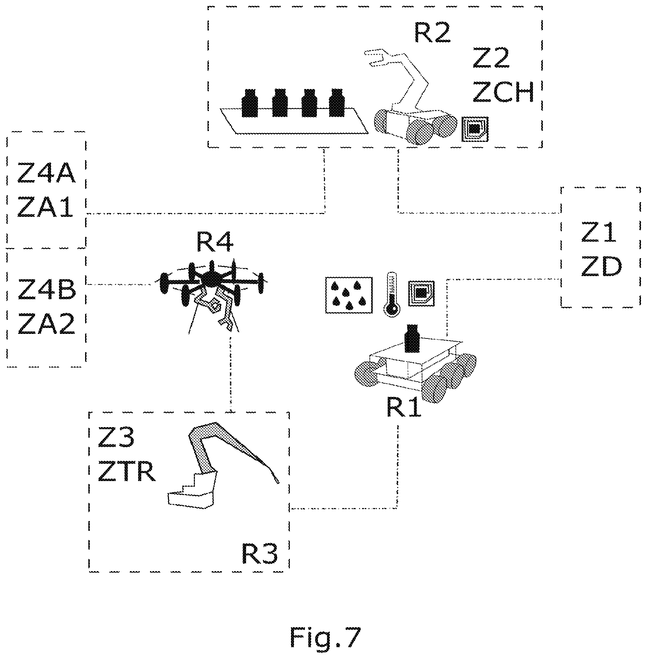

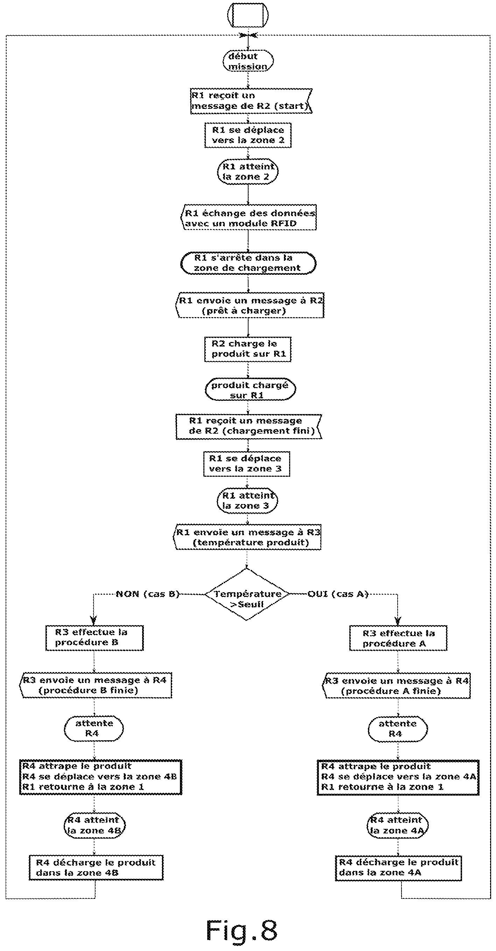

Ces procédés d'interconnexion et de gestion de la coopération entre robots permettent par exemple la réalisation d'un scénario tel que présenté aux figures 7 et 8.

La figure 7 présente quatre robots hétérogènes :
- R1 : robot mobile avec télémètre laser, avec OS ROS
- R2 : bras manipulateur avec une pince, avec OS ABB
- R3 : robot avec bras manipulateur de marque différente du robot R2 et OS ABB, et
- R4 : un drone avec OS Universal Robot

Chaque robot utilise son propre système d'exploitation robotique.

Comme résumé sur l'organigramme de la figure 8, lors de cette mission, le robot R1, muni d'un capteur d'humidité, d'un capteur de température et d'une étiquette RFID, quitte sa zone de départ Z1-ZD suite à la réception d'un message de la part du robot R2 (également muni d'une étiquette RFID) l'invitant à le rejoindre dans la zone Z2 qui correspond par exemple à une zone de chargement ZCH. Pour y parvenir, le robot R1 doit effectuer une navigation autonome en utilisant par exemple les données de sa propre odométrie et un télémètre laser. Une fois arrivé au niveau de la zone Z2, le robot R1 doit communiquer avec une puce RFID qui lui indiquera sa zone d'arrêt pour la manutention des pièces.

Lors d'une deuxième phase, il notifie au robot R2 qu'il est prêt à récupérer les objets à transporter. Ainsi, le robot R2 récupère une pièce et la dépose sur le robot R1 puis l'informe de la fin du chargement.

Le robot R1 se dirige par la suite vers la zone de traitement Z3-ZTR. Arrivé au niveau de ladite zone Z3, il notifie au robot R3 une information sur la température de la pièce.

Ce dernier effectue un « Traitement A » ou un « Traitement B », selon la température de la pièce. À la fin de cette phase, le robot R4 rejoint la zone Z3 et récupère la pièce pour la déposer selon sa température soit dans la zone Z4A ou Z4B. Pendant ce temps, le robot R1 revient dans la zone Z1 en attendant le prochain cycle.

Ainsi, comme le démontre cet exemple de scénario, les procédés selon l'invention permettent une communication fluide entre robots hétérogènes et capteurs, en proposant une architecture logicielle majoritairement générique (couches P1, P2), facile d'installation et d'utilisation (le système d'exploitation robotique initial du robot restant en place) et un principe efficace de conversion et de transmission de messages rendant la communication transparente entre les couches logicielles supérieures.

## Revendications

1. Procédé pour l'interconnexion d'un premier robot (1) avec au moins un deuxième robot (2, 21), chaque robot (1, 2, 21) comprenant au moins :
- une unité de contrôle-commande, l'unité de contrôle-commande comprenant au moins un processeur (4) et au moins un module de mémoire (M);
- au moins un équipement périphérique du type actionneur ou capteur;
- au moins un équipement de communication ;
- un premier programme (P1), configuré pour piloter l'au moins un équipement de communication, et comprenant une pluralité de premiers modules logiciels s'exécutants sur l'au moins un processeur;
- un deuxième programme (P2), comprenant une pluralité de deuxièmes modules logiciels s'exécutants sur l'au moins un processeur, la configuration dudit deuxième programme (P2) étant déterminée par un fichier de paramétrage comportant un champ typ_service indiquant un mode d'envoi parmi les modes interpréter ou direct, ledit mode d'envoi caractérisant les messages transmis par ledit deuxième programme (P2).
- un troisième programme (P3), configuré pour commander l'au moins un actionneur et/ou l'au moins un capteur, et comprenant une pluralité de troisièmes modules logiciels s'exécutant sur l'au moins un processeur;
le procédé comprenant les étapes suivantes, mises en œuvre par le deuxième programme (P2) au sein de chacun des robots (1, 2, 21), après la réception par le deuxième programme (P2) d'un premier message en provenance du troisième programme (P3) :
- conversion du premier message en un deuxième message, le deuxième message étant formaté selon une structure objet prédéfinie comprenant un champ typ_msg indiquant un type dudit message parmi les types : commande, requête, ou information,
- transmission du deuxième message à au moins un programme parmi : premier programme (P1) appartenant au même robot, deuxième programme (P2) d'un autre robot;
le procédé d'interconnexion comprenant en outre les étapes suivantes, mises en œuvre par le deuxième programme (P2) au sein de chacun des robots (1, 2, 21), après la réception par le deuxième programme (P2) d'un troisième message, formaté selon ladite structure objet prédéfinie, en provenance d'au moins un programme parmi : premier programme (P1) appartenant au même robot, deuxième programme (P2) d'un autre robot, lorsque le champ typ_msg dudit troisième message indique le type commande ou le type requête :
- traduction du troisième message en une portion de programme apte à être mise en œuvre par le troisième programme (P3) lorsque le champ typ_service du fichier de paramétrage associé audit troisième message indique le mode d'envoi direct; et/ou
- transmission selon un deuxième protocole de transport, d'au moins une partie dudit troisième message, ou de ladite portion de programme, à destination du troisième programme (P3).

2. Procédé selon la revendication 1, dans lequel l'étape de traduction comprend l'accès au sein du deuxième programme à un fichier de configuration enregistré dans l'au moins un module de mémoire (M), ledit fichier de configuration fournissant au deuxième programme la portion de programme apte à être mise en œuvre par le troisième programme (P3).

3. Procédé selon l'une des revendications 1 ou 2, dans lequel l'étape de transmission d'au moins une partie dudit troisième message, ou de ladite portion de programme, comprend au moins :
• une première transmission, selon un deuxième protocole de transport, d'un quatrième message du deuxième programme (P2) vers un quatrième programme (P4),
• une seconde transmission d'un cinquième message dudit quatrième programme (P4) à destination du troisième programme (P3).

4. Procédé selon l'une des revendications précédentes, dans lequel un premier protocole de transport est utilisé pour la transmission d'un sixième message entre le deuxième programme P2 du premier robot (1, 2, 21) et le deuxième programme P2 du deuxième robot (1, 2, 21).

5. Procédé selon l'une des revendications précédentes, dans lequel le premier, deuxième, troisième, quatrième, cinquième et sixième messages échangés sont au format JSON.

6. Procédé selon l'une des revendications 3 à 5, dans lequel le premier protocole est du type UDP.

7. Procédé selon l'une des revendications 1 à 6, dans lequel le deuxième protocole est du type TCP.

8. Procédé selon l'une des revendications précédentes, dans lequel l'au moins un équipement de télécommunication comprend un moyen de communication sans fil.

9. Procédé selon l'une des revendications précédentes, dans lequel le moyen de communication sans fil comprend au moins un module parmi : module de type WIFI, module de type RFID, module de type Bluetooth, module de type GSM.

10. Procédé selon l'une des revendications précédentes, dans lequel le deuxième programme (P2) crypte le deuxième message avant de le transmettre si le destinataire est l'au moins un deuxième robot (2), et dans lequel le deuxième programme (P2) décrypte le troisième message avant de le traduire ou de le transmettre, si l'expéditeur est l'au moins un deuxième robot (2).

11. Procédé selon l'une des revendications précédentes, dans lequel l'au moins un deuxième robot comprend un opérateur distant connecté à un serveur internet.

12. Procédé selon l'une des revendications précédentes, dans lequel le troisième programme (P3) comprend le système d'exploitation du robot et un programme pilote d'au moins un actionneur (A1, A2) et/ou d'au moins un capteur (C).

13. Procédé pour la gestion de la coopération entre une pluralité de robots (1,2, 21), chaque robot de la pluralité de robots (1, 2, 21) comprenant au moins:
- une unité de contrôle-commande, l'unité de contrôle-commande comprenant au moins un processeur (4) et au moins un module de mémoire (M);
- au moins un équipement périphérique du type actionneur (A1, A2) ou capteur (C) ;
- au moins un équipement de communication connecté à au moins un réseau de communication ;
- un premier programme (P1), configuré pour piloter l'au moins un équipement de communication, et comprenant une pluralité de premiers modules logiciels s'exécutants sur l'au moins un processeur;
- un deuxième programme (P2), comprenant une pluralité de deuxièmes modules logiciels s'exécutants sur l'au moins un processeur,
- un troisième programme (P3), configuré pour commander l'au moins un actionneur et/ou l'au moins un capteur, et comprenant une pluralité de troisièmes modules logiciels s'exécutant sur l'au moins un processeur;
le procédé comprenant les étapes suivantes :
- émission par une couche applicative hébergée par un serveur (3) ou accessible par internet, d'un fichier de mission, ledit fichier de mission comprenant une liste de tâches élémentaires planifiées et leur séquencement, et d'un fichier d'identification et de priorisation des équipements périphériques,
- réception dudit fichier de mission et dudit fichier d'identification et de priorisation, par un service équipement du premier programme (P1) de chaque robot de la pluralité de robots,
- transmission, par le premier programme (P1) de chaque robot de la pluralité de robots, d'un premier message de type requête à destination de son deuxième programme (P2), pour connaître un identifiant de chaque périphérique (A1, A2, C) disponible de l'au moins un périphérique de chaque robot de la pluralité de robots (1,2,21),
- mise en œuvre, par le deuxième programme (P2) de chaque robot de la pluralité de robot (1,2, 21), du procédé pour l'interconnexion de robots selon l'une des revendications précédentes pour demander au troisième programme (P3) et transmettre au premier programme (P1) les identifiants des périphériques (A1, A2, C) disponibles sur chaque robot de la pluralité de robots (1,2,21) ;
- traitement par le service équipement du premier programme (P1) de chaque robot de la pluralité de robots (1,2,21) des identifiants des périphériques (A1, A2, C) disponibles pour générer une liste des tâches réalisables par chaque robot (1,2,21) de la pluralité de robots (1,2,21),
- transmission à chaque robot (1,2,21) de la pluralité de robots (1,2,21) et/ou à un service centralisé du serveur, par chaque service négociation/élection du premier programme P1 de ladite liste des tâches réalisables par chaque robot de la pluralité de robots (1,2,21),
- production par un service centralisé du serveur et/ou suite à un processus de communication entre chaque service de négation/élection des robots (1,2,21), sur la base du fichier d'identification et de priorisation des périphériques et de la liste des tâches réalisables, d'une liste des robots participant à la mission,
- exécution de la mission,
- synchronisation des robots,
- supervision de l'exécution de la mission.

14. Programme d'ordinateur comprenant un ensemble d'instructions configurées pour exécuter le procédé pour l'interconnexion de robots selon l'une des revendications 1 à 12.

15. Programme d'ordinateur comprenant un ensemble d'instructions configurées pour exécuter le procédé de gestion de coopération selon la revendication 13.

## Patentansprüche

1. Verfahren für die Verbindung eines ersten Roboters (1) mit wenigstens einem zweiten Roboter (2, 21), wobei jeder Roboter (1, 2, 21) wenigstens umfasst:
- eine Schalt- und Steuereinheit, wobei die Schalt- und Steuereinheit wenigstens einen Prozessor (4) und wenigstens ein Speichermodul (M) umfasst;
- wenigstens eine Peripherieeinrichtung vom Typ Aktor oder Sensor;
- wenigstens eine Kommunikationseinrichtung;
- ein erstes Programm (P1), das konfiguriert ist, die wenigstens eine Kommunikationseinrichtung zu steuern, und das eine Vielzahl von ersten Softwaremodulen umfasst, die auf dem wenigstens einen Prozessor ausgeführt werden;
- ein zweites Programm (P2), das eine Vielzahl von zweiten Softwaremodulen umfasst, die auf dem wenigstens einen Prozessor ausgeführt werden, wobei die Konfiguration des zweiten Programms (P2) bestimmt wird durch eine Einstellungsdatei, die ein Feld typ_service umfasst, das einen Sendemodus aus den Modi Interpretieren oder Direkt angibt, wobei der Sendemodus die Nachrichten kennzeichnet, die von dem zweiten Programm (P2) übermittelt werden;
- ein drittes Programm (P3), das konfiguriert ist, den wenigstens einen Aktor und/oder den wenigstens einen Sensor zu steuern, und das eine Vielzahl von dritten Softwaremodulen umfasst, die auf dem wenigstens einen Prozessor ausgeführt werden;
wobei das Verfahren die folgenden Schritte umfasst, umgesetzt durch das zweite Programm (P2) innerhalb jedes der Roboter (1, 2, 21), nach Empfang einer ersten Nachricht, die von dem dritten Programm (P3) stammt, durch das zweite Programm (P2):
- Konvertieren der ersten Nachricht in eine zweite Nachricht, wobei die zweite Nachricht gemäß einer vordefinierten Objektstruktur formatiert ist, umfassend ein Feld typ_msg, das einen Typ der Nachricht aus folgenden Typen angibt: Befehl, Anfrage oder Information;
- Übermitteln der zweiten Nachricht an wenigstens ein Programm aus: dem ersten Programm (P1), das zu dem gleichen Roboter gehört, dem zweiten Programm (P2) eines anderen Roboters;
wobei das Verfahren zur Verbindung weiter folgende Schritte umfasst, umgesetzt durch das zweite Programm (P2) innerhalb jedes der Roboter (1, 2, 21), nach Empfang einer dritten Nachricht durch das zweite Programm (P2), die gemäß der vordefinierten Objektstruktur formatiert ist und von wenigstens einem Programm stammt aus: dem ersten Programm (P1), das zu dem gleichen Roboter gehört, dem zweiten Programm (P2) eines anderen Roboters, wenn das Feld typ_msg der dritten Nachricht den Typ Befehl oder den Typ Anfrage angibt:
- Übersetzen der dritten Nachricht in einen Programmabschnitt, der geeignet ist, von dem dritten Programm (P3) umgesetzt zu werden, wenn das Feld typ_service der Einstellungsdatei, das der dritten Nachricht zugeordnet ist, den Sendemodus Direkt angibt; und/oder
- Übermitteln, gemäß einem zweiten Transportprotokoll, wenigstens eines Teils der dritten Nachricht oder des Programmabschnitts an das dritte Programm (P3).

2. Verfahren nach Anspruch 1, wobei der Schritt des Übersetzens den Zugriff innerhalb des zweiten Programms auf eine Konfigurationsdatei umfasst, die in dem wenigstens einen Speichermodul (M) gespeichert ist, wobei die Konfigurationsdatei dem zweiten Programm den Programmabschnitt bereitstellt, der geeignet ist, von dem dritten Programm (P3) umgesetzt zu werden.

3. Verfahren nach einem der Ansprüche 1 oder 2, wobei der Schritt des Übermittelns wenigstens eines Teils der dritten Nachricht oder des Programmabschnitts wenigstens umfasst:
• ein erstes Übermitteln, gemäß einem zweiten Transportprotokoll, einer vierten Nachricht des zweiten Programms (P2) an ein viertes Programm (P4),
• ein zweites Übermitteln einer fünften Nachricht des vierten Programms (P4) an das dritte Programm (P3).

4. Verfahren nach einem der vorstehenden Ansprüche, wobei ein erstes Transportprotokoll zum Übermitteln einer sechsten Nachricht zwischen dem zweiten Programm P2 des ersten Roboters (1, 2, 21) und dem zweiten Programm P2 des zweiten Roboters (1, 2, 21) verwendet wird.

5. Verfahren nach einem der vorstehenden Ansprüche, wobei die ausgetauschte erste, zweite, dritte, vierte, fünfte und sechste Nachricht im Format JSON sind.

6. Verfahren nach einem der Ansprüche 3 bis 5, wobei das erste Protokoll vom Typ UDP ist.

7. Verfahren nach einem der Ansprüche 1 bis 6, wobei das zweite Protokoll vom Typ TCP ist.

8. Verfahren nach einem der vorstehenden Ansprüche, wobei die wenigstens eine Telekommunikationseinrichtung ein drahtloses Kommunikationsmittel umfasst.

9. Verfahren nach einem der vorstehenden Ansprüche, wobei das drahtlose Kommunikationsmittel wenigstens ein Modul umfasst aus: einem Modul vom Typ WIFI, einem Modul vom Typ RFID, einem Modul vom Typ Bluetooth, einem Modul vom Typ GSM.

10. Verfahren nach einem der vorstehenden Ansprüche, wobei das zweite Programm (P2) die zweite Nachricht verschlüsselt, bevor sie übermittelt wird, wenn der Empfänger der wenigstens eine zweite Roboter (2) ist, und wobei das zweite Programm (P2) die dritte Nachricht entschlüsselt, bevor sie übersetzt oder übermittelt wird, wenn der Sender der wenigstens eine zweite Roboter (2) ist.

11. Verfahren nach einem der vorstehenden Ansprüche, wobei der wenigstens eine zweite Roboter einen entfernten Bediener umfasst, der mit einem Internetserver verbunden ist.

12. Verfahren nach einem der vorstehenden Ansprüche, wobei das dritte Programm (P3) das Betriebssystem des Roboters und ein Steuerprogramm für wenigstens einen Aktor (A1, A2) und/oder wenigstens einen Sensor (C) umfasst.

13. Verfahren zur Verwaltung der Kooperation zwischen einer Vielzahl von Robotern (1, 2, 21), wobei jeder Roboter aus der Vielzahl von Robotern (1, 2, 21) wenigstens umfasst:
- eine Schalt- und Steuereinheit, wobei die Schalt- und Steuereinheit wenigstens einen Prozessor (4) und wenigstens ein Speichermodul (M) umfasst;
- wenigstens eine Peripherieeinrichtung vom Typ Aktor (A1, A2) oder Sensor (C);
- wenigstens eine Kommunikationseinrichtung, die mit wenigstens einem Kommunikationsnetz verbunden ist;
- ein erstes Programm (P1), das konfiguriert ist, die wenigstens eine Kommunikationseinrichtung zu steuern, und das eine Vielzahl von ersten Softwaremodulen umfasst, die auf dem wenigstens einen Prozessor ausgeführt werden;
- ein zweites Programm (P2), das eine Vielzahl von zweiten Softwaremodulen umfasst, die auf dem wenigstens einen Prozessor ausgeführt werden;
- ein drittes Programm (P3), das konfiguriert ist, den wenigstens einen Aktor und/oder den wenigstens einen Sensor zu steuern, und das eine Vielzahl von dritten Softwaremodulen umfasst, die auf dem wenigstens einen Prozessor ausgeführt werden;
wobei das Verfahren folgende Schritte umfasst:
- Aussenden, über eine Anwendungsebene, die von einem Server (3) gehostet wird oder über Internet zugänglich ist, einer Missionsdatei, wobei die Missionsdatei eine Liste geplanter elementarer Aufgaben und ihre Sequenzierung umfasst, und einer Datei zur Identifikation und Priorisierung der Peripherieeinrichtungen,
- Empfangen der Missionsdatei und der Datei zur Identifikation und Priorisierung durch einen Einrichtungsdienst des ersten Programms (P1) jedes Roboters aus der Vielzahl von Robotern,
- Übermitteln, durch das erste Programm (P1) jedes Roboters aus der Vielzahl von Robotern, einer ersten Nachricht vom Typ Anfrage an sein zweites Programm (P2), um einen Identifikator jedes verfügbaren Peripheriegeräts (A1, A2, C) des wenigstens einen Peripheriegeräts jedes Roboters aus der Vielzahl von Robotern (1, 2, 21) zu erfahren,
- Umsetzen, durch das zweite Programm (P2) jedes Roboters aus der Vielzahl von Robotern (1, 2, 21), des Verfahrens für die Verbindung von Robotern nach einem der vorstehenden Ansprüche, um die Identifikatoren der auf jedem Roboter aus der Vielzahl von Robotern (1, 2, 21) verfügbaren Peripheriegeräte (A1, A2, C) am dritten Programm (P3) abzufragen und dem ersten Programm (P1) zu übermitteln;
- Verarbeiten, durch den Einrichtungsdienst des ersten Programms (P1) jedes Roboters aus der Vielzahl von Robotern (1, 2, 21), der Identifikatoren der verfügbaren Peripheriegeräte (A1, A2, C), um eine Liste der von jedem Roboter (1, 2, 21) aus der Vielzahl von Robotern (1, 2, 21) ausführbaren Aufgaben zu generieren,
- Übermitteln, an jeden Roboter (1, 2, 21) aus der Vielzahl von Robotern (1, 2, 21) und/oder an einen zentralisierten Dienst des Servers, über jeden Dienst zur Verhandlung/Auswahl des ersten Programms P1, der Liste der von jedem Roboter aus der Vielzahl von Robotern (1, 2, 21) ausführbaren Aufgaben,
- Erzeugen, durch einen zentralisierten Dienst des Servers und/oder nach einem Kommunikationsprozess zwischen jedem Dienst zur Verhandlung/Auswahl der Roboter (1, 2, 21), auf der Grundlage der Datei zur Identifikation und Priorisierung der Peripheriegeräte und der Liste der ausführbaren Aufgaben, einer Liste der Roboter, die an der Mission teilnehmen,
- Ausführen der Mission,
- Synchronisieren der Roboter,
- Überwachen der Ausführung der Mission.

14. Computerprogramm, umfassend eine Einheit von Anweisungen, die konfiguriert sind, das Verfahren für die Verbindung von Robotern nach einem der Ansprüche 1 bis 12 auszuführen.

15. Computerprogramm, umfassend eine Einheit von Anweisungen, die konfiguriert sind, das Verfahren zur Verwaltung der Kooperation nach Anspruch 13 auszuführen.

## Claims

1. A method for interconnecting a first robot (1) with at least one second robot (2, 21), each robot (1, 2, 21) comprising at least:
- a monitor-control unit, the monitor-control unit comprising at least one processor (4) and at least one memory module (M);
- at least one peripheral equipment such as an actuator or a sensor;
- at least one communication equipment;
- a first program (P1), configured to pilot the at least one communication equipment, and comprising a plurality of first software modules executed on the at least one processor;
- a second program (P2), comprising a plurality of second software modules executed on the at least one processor, the configuration of said second program (P2) being determined by a setup file including a field typ_service indicating a sending mode amongst the interpret or direct modes, said sending mode characterizing the messages transmitted by said second program (P2);
- a third program (P3), configured to control the at least one actuator and/or the at least one sensor, and comprising a plurality of third software modules executed on the at least one processor;
the method comprising the following steps, implemented by the second program (P2) within each of the robots (1, 2, 21), after reception by the second program (P2) of a first message originating from the third program (P3):
- conversion of the first message into a second message, the second message being formatted according to a predefined object structure comprising a field typ_msg indicating a type of said message amongst the types: command, query, or information;
- transmission of the second message to at least one program amongst: a first program (P1) belonging to the same robot, a second program (P2) of another robot;
the interconnection method further comprising the following steps, implemented by the second program (P2) within each of the robots (1, 2, 21), after reception by the second program (P2) of a third message, formatted according to said predefined object structure, originating from at least one program amongst: a first program (P1) belonging to the same robot, a second program (P2) of another robot, when the field typ_msg of said third message indicates the command type or the query type:
- translation of the third message into a program portion adapted to be implemented by the third program (P3) when the field typ_service of the setup file associated to said third message indicates the direct sending mode; and/or
- transmission according to a second transport protocol, of at least one portion of said third message, or of said program portion, to the third program (P3).

2. The interconnection method according to claim 1, wherein the translation step comprises access within the second program to a configuration file recorded in the at least one memory module (M), said configuration file providing the second program with the program portion adapted to be implemented by the third program (P3).

3. The interconnection method according to any of claims 1 or 2, wherein the step of transmitting at least one portion of said third message, or of said program portion, comprises at least:
• a first transmission, according to a second transport protocol, of a fourth message from the second program (P2) towards a fourth program (P4),
• a second transmission of a fifth message from said fourth program (P4) to the third program (P3).

4. The interconnection method according to any of the preceding claims, wherein a first transport protocol is used for the transmission of a sixth message between the second program P2 of the first robot (1, 2, 21) and the second program P2 of the second robot (1, 2, 21).

5. The interconnection method according to any of the preceding claims, wherein the first, second, third, fourth, fifth and sixth exchanged messages are in JSON format.

6. The interconnection method according to any of claims 3 to 5, wherein the first protocol is of the UDP type.

7. The interconnection method according to any of claims 1 to 6, wherein the second protocol is of the TCP type.

8. The interconnection method according to any of the preceding claims, wherein the at least one telecommunication equipment comprises a wireless communication means.

9. The interconnection method according to any of the preceding claims, wherein the wireless communication means comprises at least one module amongst: a WIFI type module, a RFID type module, a Bluetooth type module, a GSM type module.

10. The interconnection method according to any of the preceding claims, wherein the second program (P2) encrypts the second message before transmitting it if the addressee is the at least one second robot (2), and wherein the second program (P2) decrypts the third message before translating or transmitting it, if the sender is the at least one second robot (2).

11. The interconnection method according to any of the preceding claims, wherein the at least one second robot comprises a remote operator connected to an Internet server.

12. The interconnection method according to any of the preceding claims, wherein the third program (P3) comprises the operating system of the robot and a driver program of at least one actuator (A1, A2) and/or of at least one sensor (C).

13. A method for managing the cooperation between a plurality of robots (1, 2, 21), each robot of the plurality of robots (1, 2, 21) comprising at least:
- a monitor-control unit, the monitor-control unit comprising at least one processor (4) and at least one memory module (M);
- at least one peripheral equipment such as an actuator (A1, A2) or a sensor (C);
- at least one communication equipment connected to at least one communication network;
- a first program (P1), configured to pilot the at least one communication equipment, and comprising a plurality of first software modules executed on the at least one processor;
- a second program (P2), comprising a plurality of second software modules executed on the at least one processor;
- a third program (P3), configured to control the at least one actuator and/or the at least one sensor, and comprising a plurality of third software modules executed on the at least one processor;
the method comprising the following steps:
- emission by an application layer hosted by a server (3) or accessible through the Internet, of a mission file, said mission file comprising a list of planned elementary tasks and the sequencing thereof, and of an identification and prioritization file of the peripheral equipment,
- reception of said mission file and of said identification and prioritization file, by an equipment service of the first program (P1) of each robot of the plurality of robots,
- transmission, by the first program (P1) of each robot of the plurality of robots, of a first query-type message to its second program (P2), to determine an identifier of each available peripheral (A1, A2, C) of the at least one peripheral of each robot of the plurality of robots (1, 2, 21),
- implementation, by the second program (P2) of each robot of the plurality of robots (1, 2, 21), of the method for interconnecting robots according to any of the preceding claims to request from the third program (P3) and transmit to the first program (P1) the identifiers of the peripherals (A1, A2, C) available on each robot of the plurality of robots (1, 2, 21);
- processing by the equipment service of the first program (P1) of each robot of the plurality of robots (1, 2, 21) of the identifiers of the available peripherals (A1, A2, C) to generate a list of tasks feasible by each robot (1, 2, 21) of the plurality of robots (1, 2, 21),
- transmission to each robot (1, 2, 21) of the plurality of robots (1, 2, 21) and/or to a centralized service of the server, by each negotiation/election service of the first program P1 of said list of the tasks feasible by each robot of the plurality of robots (1, 2, 21),
- production by a centralized service of the server and/or following a process of communication between each negotiation/election service of the robots (1, 2, 21), based on the identification and prioritization file of the peripherals and on the list of feasible tasks, of a list of robots participating in the mission,
- execution of the mission,
- synchronization of the robots,
- supervision of the execution of the mission.

14. A computer program comprising a set of instructions configured to execute the method for interconnecting robots according to any of claims 1 to 12.

15. A computer program comprising a set of instructions configured to execute the cooperation management method according to claim 13.
